Europäisches Patentamt

European Patent Office

Office européen des brevets

(19)

(11) Veröffentlichungsnummer : **0 240 860 B1**

(12) **EUROPÄISCHE PATENTSCHRIFT**

(45) Veröffentlichungstag der Patentschrift :
13.11.91 Patentblatt 91/46

(51) Int. Cl.⁵ : **F24H 9/12, F24D 3/10,**
**F16K 27/02, F16K 1/42,**
**F24D 19/10, F16L 25/00**

(21) Anmeldenummer : 87104485.5

(22) Anmeldetag : 26.03.87

(54) Heizkessel.

(30) Priorität : **16.07.86 DE 8618987 U**
**23.05.86 DE 8614038 U**
**01.04.86 DE 8608735 U**
**16.03.87 DE 8703928 U**

(43) Veröffentlichungstag der Anmeldung :
**14.10.87 Patentblatt 87/42**

(45) Bekanntmachung des Hinweises auf die
Patenterteilung :
**13.11.91 Patentblatt 91/46**

(84) Benannte Vertragsstaaten :
**AT BE CH DE FR IT LI NL**

(56) Entgegenhaltungen :
**DE-A- 2 411 998**

(56) Entgegenhaltungen :
**DE-A- 3 015 257**
**DE-A- 3 230 950**
**DE-U- 8 330 346**
**FR-A- 2 406 169**
**Taschenbuch für Heizungs- und Klimatechnik,**
**60. Ausgabe 1979, Seiten 488-489**

(73) Patentinhaber : **Viessmann, Hans, Dr.**
**Im Hain 24**
**W-3559 Battenberg/Eder (DE)**

(72) Erfinder : **Viessmann, Hans, Dr.**
**Im Hain 24**
**W-3559 Battenberg/Eder (DE)**

(74) Vertreter : **Wolf, Günter, Dipl.Ing.**
**Patentanwälte Dipl.-Ing. Amthor Dipl.-Ing. Wolf**
**Postfach 70 02 45 An der Mainbrücke 16**
**W-6450 Hanau 7 (DE)**

EP 0 240 860 B1

**Beschreibung**

Die Erfindung betrifft einen Heizkessel mit mindestens einem an den Vor- und Rücklaufanschlüssen des Heizkessels angeschlossenen Heizungskreisverteiler gemäß Oberbegriff des Patentanspruches 1.

Heizkessel mit Heizungskreisverteiler, die mit ihrer Verlaufsebene senkrecht zur Heizkesselrückwand angeordnet sind, sind nach der DE-A-24 11 998 und Taschenbuch für Heizung und Klimatecknik, 60. Ausgabe 1979, Seiten 488-489 bekannt und bedürfen insoweit keiner näheren Erläuterung, da zwangsläufig jeder Heizkessel mit derartigen Heizungskreisverteilern mit einem oder mehreren Heizungskreisen verbunden werden muß. Dabei ist es einerseits üblich, die Anordnung, Montage und Verbindung der zu einem Heizungskreisverteiler gehörenden Elemente dem Installateur zu überlassen, der dabei für die richtige funktionelle Zuordnung der Einzelelemente und für den richtigen Anschluß an die Anschlußstutzen des Kessels zu sorgen hat. In der Regel wird dabei aber nicht auf eine kompakte Bauweise im Bereich der Rück- bzw. Anschlußseite des Heizkessels geachtet. Bekannt ist auch, derartige Heizungskreisverteiler als vorgefertigte Baueinheiten vorzusehen, die lediglich an die Anschlußstutzen des Heizkessels anzuschließen sind, was jedoch zu Montageschwierigkeiten führen kann, wenn mehrere Heizungskreise anzuschließen sind und der betreffende Heizkessel bspw. in einer Ecke des Aufstellraumes für den Heizkessel Aufstellung finden soll. Sowohl bei der einen als auch der anderen Installationsart kann dies zumindest zu eingeschränkten Zugriffs- und auch Ableseschwierigkeiten von Absperrorganen und Ablesegeräten führen und natürlich auch zu Montageschwierigkeiten, wenn das eine oder andere Element des bzw. der Heizungskreisverteiler ausgetauscht werden muß.

Der Erfindung liegt demgemäß die Aufgabe zugrunde, einen Heizkessel der eingangs genannten Art dahingehend zu verbessern, daß seine Rück- bzw. Anschlußseite mit Abzugsrohr und ihrem mindestens einen Heizungskreisverteiler bei kompakter Raumausnutzung trotzdem eine gute Zugänglichkeit, Handhabbarkeit und Ablesbarkeit der Anzeigegeräte und Ventile gewährleistet und zwar weitgehend unabhängig von den räumlichen Gegebenheiten am Aufstellungsplatz des Heizkessels.

Diese Aufgabe ist mit einem Heizkessel der eingangs genannten Art nach der Erfindung durch die im Kennzeichen des Hauptanspruches angeführten Merkmale gelöst. Vorteilhafte Weiterbildungen ergeben sich nach den Unteransprüchen.

Durch diese Ausbildung des Heizkessels bzw. durch die Gestaltung der gesamten Heizkesselrückseite erstreckt sich der mindestens eine Heizungskreisverteiler konsequent in einer Verlaufsebene, die sich senkrecht zur Heizungskesselrückwandfläche neben dem zentrischen Rauchgasabzugsrohr erstreckt, wobei die im Heizungskreisverteiler enthaltenen Armaturen mit ihren Längsachsen quer zur Verlaufsebene angeordnet sind. Abgesehen davon, daß der Heizungskreisverteiler mit seinen Vor- und Rücklaufsträngen, auch wenn diese durch ein Mehrwegeventil miteinander verknüpft sein sollten, in der Verlaufsebene wenig Raum beansprucht, führt diese Gesaltung immer zu einer bequemen Zugänglichkeit und Ablesbarkeit der im Heizungskreisverteiler enthaltenen Elemente von der einen oder anderen Seite, wobei diese Zugänglichkeit unabhängig davon gewährleistet ist, ob nun der betreffende Heizkessel mit seiner einen oder anderen Seite in Wandnähe aufgestellt wird. Soll ein zweiter Heizungskreisverteiler mit vorgesehen werden, so steht für diesen die andere Seite neben dem Rauchgasabzugsrohr frei zur Verfügung, auf der dann der andere Heizungskreisverteiler nach dem gleichen Prinzip angeordnet wird, d.h., ebenfalls in einer Ebene verlaufend, die senkrecht zur Rückwandfläche des Heizkessels verläuft. Ist dabei der betreffende Heizkessel bspw. mit seiner von vorn gesehen rechten Seite in Wandnähe aufgestellt, so werden sämtliche Anzeigegeräte nach der linken Seite des Heizkessels orientiert eingebaut, so daß die Anzeigegeräte beider Heizungskreisverteiler von dieser Seite her eingesehen werden können. Voraussetzung dafür ist, daß die Anzeigearmaturen, nämlich Manometer und/oder Temperaturanzeiger in den Böden der Absperrventile und in bezug auf die Verlaufsebene nach der gleichen Seite orientiert angeordnet sind, wofür die Mittelteile dieser Absperrventile als beidseitig offene Rohrstücke ausgebildet sind, und der Ventilverschlußkörper mit seiner Stellspindel und seinem Stellgriff von der einen oder anderen Seite in das offene Ende des Rohrstückes eingeschraubt ist und in der anderen Öffnung ein Verschlußstopfen oder ein einschraubbares Anzeigegerät sitzt. Dadurch können die Ventile "rechts wie links" in die Heizungskreisverteiler eingebaut werden, wobei man es dann ohne weiteres in der Hand hat, sämtliche Anzeigegeräte des einen oder beider Heizungskreisverteiler nach der gleichen Seite orientiert einzubauen. Abgesehen davon wird dadurch vorteilhaft die Gesamtinstallationsarbeit reduziert, da für die Anzeigegeräte keine besonderen Einbaustellen mehr vorgesehen werden müssen, wie das beim Gegenstand der DE-U-83 30 346 der fall ist.

In Rücksicht auf die "Seitenunabhängigkeit" der Gesamtinstallation ist das Mehrwegeventil (Vierwegemischventil), das in der Regel mindestens für einen der Heizungskreisverteiler vorzusehen ist, mit beidseitig angeordneten, zur Drehschieberachse zentrischen Drehschiebereinsatzöffnungen versehen. Hierbei liegt also das gleiche Prinzip wie bei den vorerwähnten Absperrventilen vor, d.h. unabhängig davon, in welchem Heizungskreisverteiler das Mehrwegeventil sitzt, wird die schlechter zugängliche Seite des Mehrwegmischventiles mit einem Verschlußdeckel verschlossen und von der anderen Seite der
Drehschieber mit seinem Verschlußdeckel und seinem Stellmotor angeordnet. Um die Verlaufsebene
der Heizungskreisverteiler mit möglichst geringem
Abstand zueinander anordnen zu können, werden bei
Anordnung von zwei Heizungskreisverteilern am Kessel deren Umwälzpumpen sich auf gleicher Höhe
gegenüberstehend, aber in bezug auf die beiden Verlaufsebenen mit jeweils nach außen gerichteten Pumpenmotoren angeordnet. Dadurch bleibt die
Gesamtanordnung mit ihren aus den Verlaufsebenen
seitlich herausragenden Teilen, nämlich Pumpenmotoren, Stellgriffe, Stellmotor für das Mischventil und
den Anzeigegeräten innerhalb der Fluchtebenen der
beiden Heizkesselseitenwände, und außerdem ergibt
sich eine insgesamt außerordentlich übersichtliche,
zugriffsgünstige und ohne Schwierigkeiten bezüglich
der Anzeigegeräte ablesbare und hinsichtlich der
Raumausnutzung trotzdem kompakte Anordnung
innerhalb der Fluchtebenen der beiden Heizkesselseitenwangen.

Eine vorteilhafte Weiterbildung, die dank der
kompakten und in einer Ebene sich erstreckenden
Bauweise des bzw. der Heizkreisverteiler ermöglicht
ist, besteht darin, was noch näher erläutert wird, daß
der Heizkreisverteiler insgesamt mit zwei gegeneinander schließenden, wärmeisolierenden Schalen auf
einfachste Weise isoliert werden kann.

Der erfindungsgemäße Heizkessel wird nachfolgend anhand der zeichnerischen Darstellung von
Ausführungsbeispielen zweier Heizungskreisverteiler
näher erläutert.

Es zeigt schematisch
Fig. 1 perspektivisch die Anordnung zweier Heizungskreisverteiler innerhalb zweier sich senkrecht zur Kesselrückwandfläche erstreckenden
Verlaufsebenen;
Fig. 2 eine Ansicht der Heizkesselrückseite;
Fig. 3 eine Seitenansicht in Pfeilrichtung A;
Fig. 4 eine Seitenansicht in Pfeilrichtung B;
Fig. 5 einen Schnitt durch einen besonders ausgebildeten Leitungsabschnitt des Heizungskreisverteilers;
Fig. 6 einen Schnitt durch ein Absperrventil und
Fig. 7,8 eine Rück- und Seitenansicht eines Heizkessels gemäß Fig. 2 mit wärmeisolierten Heizungskreisverteilern.

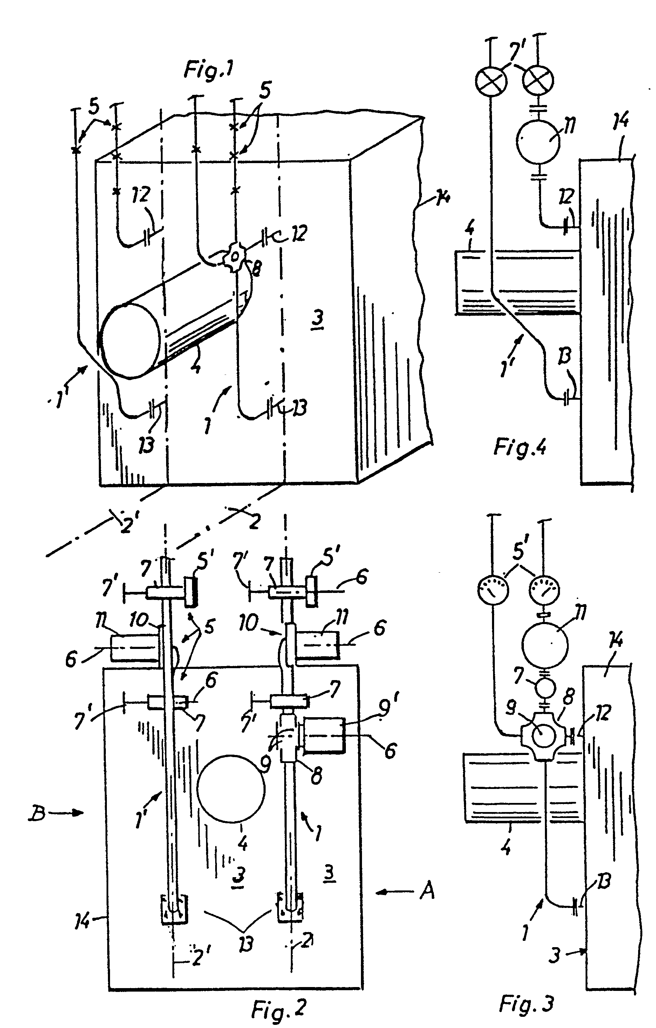

Wie in Fig. 1, 2 dargestellt, ist der Heizkessel 14
mit zwei an seinen Vor- und Rücklaufanschlüssen 12,
13 angeschlossenen Heizkreisverteilern 1, 1'
versehen, in denen die Armaturen, nämlich Umwälzpumpen 10, Absperrventile 7 besonderer Art, im Heizungskreisverteiler 1 ein Vierwegmischventil 8 und
Anzeigegeräte 5' angeordnet sind. Wie ersichtlich,
sind die beiden Heizungskreisverteiler 1, 1' mit ihren
Verlaufsebenen 2, 2' (strichpunktiert angedeutet)
senkrecht zur Heizkesselrückwandfläche 3 beidseitig neben dem Rauchgasabzugsrohr 4 angeordnet,
wobei sämtliche Armaturen 5 mit ihren Längsachsen
6 quer zu den Verlaufsebenen angeordnet sind.
Dadurch ergibt sich eine außerordentlich übersichtliche Anordnung der beiden Heizungskreisverteiler
und ihrer Armaturen 5, wie aus Fig. 2 ersichtlich,
wobei sich sämtliche Armaturen mit ihrem aus den
Verlaufsebenen 2, 2' herausragenden Teilen innerhalb der Fluchtebenen der beiden Kesselseitenwangen erstrecken. Im dargestellten Beispiel sind dabei
die Anzeigegeräte beider Heizungskreisverteiler 1, 1'
nach der gleichen Seite, d.h. im Beispiel nach rechts
orientiert, so daß sie bequem von dieser Seite aus
abgelesen werden können. Wie ersichtlich sind dabei
die Anzeigegeräte 5' vorteilhaft in die Böden der
Absperrventile 7 eingeschraubt, deren Stellgriffe 7'
dabei zwangsläufig gemeinsam nach der anderen
Seite orientiert sind, was aber deren Zugriffsmöglichkeit in keiner Weise behindert, da man ohne weiteres
zwischen die beiden Verlaufsebenen bzw. neben die
linke Verlaufsebene eingreifen kann. Die Umwälzpumpe 10 sind wie aus Fig. 2 ersichtlich angeordnet,
d.h., deren Antriebsmotoren 11 weisen in bezug auf
die Verlaufsebenen 2, 2' jeweils nach außen,
wodurch diese bezüglich ihres Abstandes so nahe
aneinandergerückt werden können, wie dies einerseits das zentrische Rauchgasabzugsrohr 4 zuläßt
und ferner die Zugriffsmöglichkeit zu den Stellgriffen
7' und die Ablesbarkeit der Anzeigegeräte 5' für den
von einer Seite gesehen hinter dem vorderen Heizungskreisverteiler 1 angeordneten zweiten Heizungskreisverteiler 1'. Außerdem ist dadurch die
übersichtliche und installationsfreundliche Anordnung der beiden Umwälzpumpen 10 auf gleicher
Höhe ermöglicht.

Was das im Heizungskreisverteiler 1 angeordnete Vierwegemischventil 8 betrifft, so ist dessen Gehäuse mit beidseitig angeordneten zur
Drehschieberachse zentrischen Drehschiebereinsatzzöffnungen 9 versehen, so daß der Stellmotor 9' für
dieses Ventil 8 ebenfalls beliebig auf der einen oder
anderen Seite angebracht werden kann, wobei die
jeweils offenbleibende Einsatzöffnung 9 mit einem
geeigneten Verschlußdeckel abgedichtet verschlossen wird. Es spielt also dabei keine Rolle, ob das
Mischventil im einen oder anderen Heizungskreisverteiler angeordnet ist, d.h., orientiert am Ausführungsbeispiel gemäß Fig. 2 kann das Mischventil 8 in
gleicher Weise auch im Heizungskreisverteiler 1' angeordnet werden, wenn dieser Heizungskreis eine
Rücklaufbeimischung ebenfalls verlangt oder ausschließlich für diesen Heizungskreisverteiler eine
Rücklaufbeimischung vorgesehen ist. In diesem Falle
würde dann der Stellmotor im Gegensatz zur Darstellung in Fig. 2 nach links gerichtet am Mischventil 8
angeschlossen sein und dabei ebenfalls innerhalb
der Fluchtebene der betreffenden Kesselseitenflanke
bleiben.

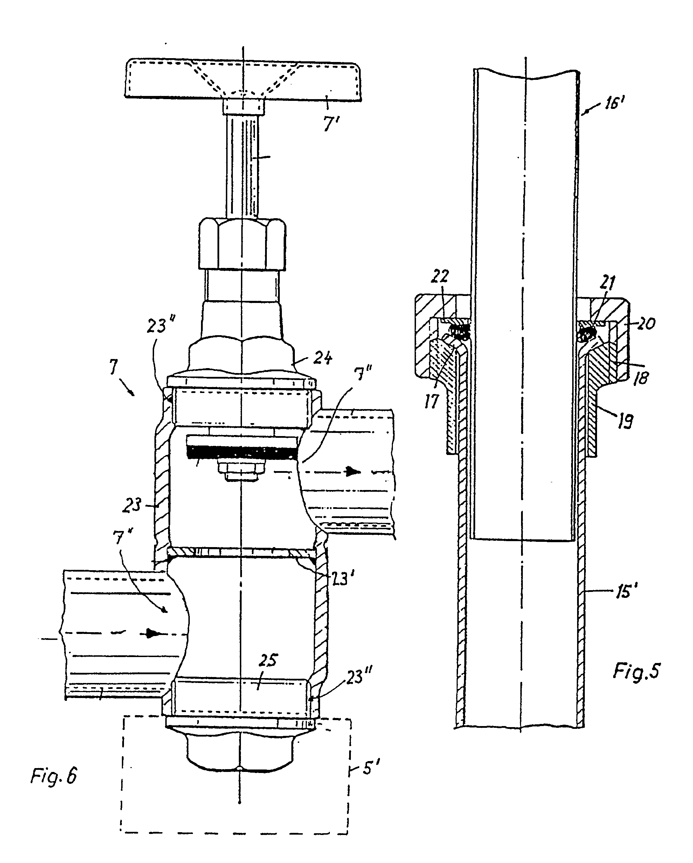

Durch eine besondere Ausbildung des Heizungskre sverteilers gemäß Fig. 5 wird vorteilhaft erreicht, daß die an die Vor- und Rücklaufanschlußstutzen 12, 13 des Heizkessels anzuschließenden entsprechenden Anschlüsse des Verteilers 1 für bezüglich der Distanz der Vor- und Rücklaufanschlußstutzen unterschiedliche Heizkessel verwendet werden können, ohne solche unterschiedliche Distanzen von vornherein bei der Serienfertigung derartiger Verteiler durch entsprechende Anpassung der Anschlußmaße berücksichtigen zu müssen. In der Regel wird dabei eine Verstellbarkeit des Verteilers in sich in der Größenordnung von 10 bis 15 cm ausreichen. Da der Vorlaufstrang derartiger Verteiler 1 in der Regel die einleitend erwähnten Elemente enthält, wird der verstellbare Verbindungsbereich bevorzugt in den Rücklaufstrang des Verteilers verlegt, und, sofern der Verteiler einen Mischer aufweist, in den Vorlaufstrang, der sich zwischen Mischer und Heizkesselrücklaufanschluß befindet. Wie aus Fig. 5 erkennbar, ist der Verteiler diesbezüglich im einzelnen derart ausgebildet, daß das aufnehmende Leitungsteil 15', in das das andere 16' eingreift, mit einem Bördelrand 17 versehen ist. Hinter diesem Bördelrand 17 ist ein mit Außengewinde 18 versehener, äußerlich mehreckiger Haltering 19 mit Überwurfmutter 20 angeordnet, wobei der Haltering 19 und die Überwurfmutter 20 in bezug auf ihre Leitungsteile 15', 16' auf diesen lose drehbar angeordnet sind. Die äußerlich mehreckige Ausbildung des Halteringes 19 dient dazu, um, wie an der Überwurfmutter 20, einen passenden Maulschlüssel ansetzen zu können. Zwischen dem Bördelrand 17 und der Überwurfmutter 20 ist zwecks flüssigkeitsdichter und druckfester Abdichtung eine Ringdichtung 21 angeordnet und zwischen der Ringdichtung 21 und der Überwurfmutter 20, wie dargestellt, eine Ringscheibe 22, die dafür sorgt, daß bei Festspannen der Überwurfmutter 20 am Haltering 19 die Ringdichtung 21 nicht verquetscht wird, was wesentlich ist, da die Abdichtung auch druckdicht in Hinsicht auf den im ganzen Anlagesystem vorhandenen Druck dicht sein muß. Der Bördelrand 17 wird vorteilhaft konisch unter Ausbildung eines nach innen gerichteten Keilsitzes für die Ringdichtung 21 ausgebildet, damit diese bei axialer Belastung nicht radial nach außen ausweiche kann, sondern sich fest gegen das eingreifende Leitungsteil 16' preßt.

Die im Heizkreisverteiler 1, mit Zu- und Abströmöffnungen 7″ versehenen Absperrventile 7 sind gemäß Fig. 6 derart ausgebildet, daß diese jeweils aus einem beidseitig offenen Rohrstück 23 mit zentrisch angeordnetem Ventilsitzring 23' bestehen. Dadurch kann an der einen oder anderen Seite der Ventilverschlußkörper 24 mit seinem Stellgriff und auf der jeweils anderen Seite ein Verschlußstopfen 25 oder auch ein Anzeigegerät 5' (gestrichelt angedeutet) in der betreffenden und der anderen öffnung 23″ axial gegenüberstehenden öffnung 23″ angeordnet

werden.

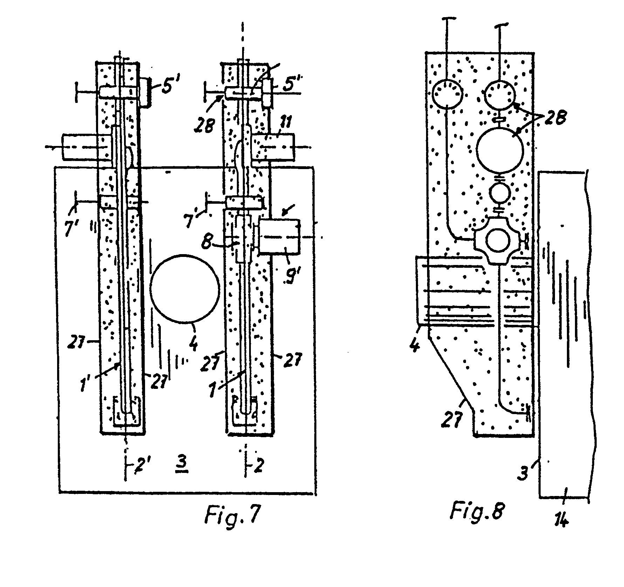

Dafik der Verlaufsanordnung des bzw. der Heizungskreisverteiler in einer Ebene senkrecht zur Heizkesselrückwandfläche 3 besteht eine weitere vorteilhafte Ausbildung des Heizkessels, wie in Fig. 7, 8 dargestellt, darin, daß der mindestens eine Heizungskreisverteiler 1 mit seinen Armaturen zwischen zwei gegeneinander schließenden Schalen 27 aus wärmeisolierendem Material angeordnet ist und die Schalen 27 mit Durchgriffs- und/oder Sichtöffnungen 28 für Armaturenzugriffs-, -anschluß- und -ableseelemente versehen sind. Durch diese Ausbildung des Heizkessels bzw. die spezielle Gestaltung des mindestens einen Heizungskreisverteilers, kann die Isolation paß- und formgerecht vorteilhaft bereits beim Hersteller gefertigt und problemlos an Ort und Stelle durch einfaches Ansetzen der beiden Isolierschalen angebracht werden, falls der betreffende Heizkessel nicht sogar schon einschließlich Isolation installationsfertig vom Hersteller aus geliefert wird.

## Patentansprüche

1. Heizkessel (14) mit mindestens einem an den Vor- und Rücklaufanschlüssen (12,13) des Heizkessels angeschlossenen Heizungskreisverteiler (1), in dem Armaturen, wie Umwälzpumpe, Absperr- und Mehrwegeventile und Manometer, Temperaturanzeiger od. dgl. angeordnet sind, wobei der Heizungskreisverteiler (1) mit seiner Verlaufsebene (2) senkrecht zur Heizkesselrückwandfläche (3) neben dem Rauchgasabzugsrohr (4) angeordnet ist und in diesem die Armaturen (5) mit ihren Längsachsen (6) quer zur Verlaufsebene (2) und die Anzeigearmaturen (5') in bezug auf die Verlaufsebenen (2, 2') nach der gleichen Seite orientiert angeordnet sind,
**dadurch gekennzeichnet ,**
daß die im Heizungskreisverteiler (1) angeordneten, mit Zu- und Abflußöffnungen (7″) versehenen Absperrventile (7) aus jeweils einem beidseitig offenen Rohrstück (23) gebildet sind und an dessen sich gegenüberstehenden öffnungen (23″) von der einen oder anderen Seite der Ventilverschlußkörper (24) und an der jeweils anderen freien Seite ein Verschlußstopfen (25) oder ein Anzeigegerät (5') angeordnet ist, und daß beim Mehrwegeventil (8) im Heizungskreisverteiler (1, 1') dessen Gehäuse mit beidseitig angeordneten, zur Drehschieberachse zentrischen Drehschiebereinsatzöffnungen (9) versehen ist.

2. Heizkessel nach Anspruch 1,
**dadurch gekennzeichnet,**
daß ein zweiter Heizungskreisverteiler (1') mit seiner Verlaufsebene (2') parallel zur Verlaufsebene (2) des ersten Heizungskreisverteilers (1) auf der anderen Seite des Rauchgasabzugsrohres (4) angeordnet ist.

3. Heizkessel nach Anspruch 2,

dadurch gekennzeichnet ,
daß bei Anordnung von zwei Heizkreisverteilern (1, 1') deren Umwälzpumpen (10) sich auf gleicher Höhe gegenüberstehen, aber in bezug auf die beiden Verlaufsebenen (2, 2') mit jeweils nach außen gerichteten Pumpenmotoren (11) angeordnet sind.

4. Heizkessel nach einem der Ansprüche 1 bis 3,
dadurch gekennzeichnet,
daß der mindestens eine Heizungskreisverteiler (1) mit seinen Armaturen zwischen zwei gegeneinander schließenden Schalen (27) aus wärmeisolierendem Material angeordnet ist und die Schalen (27) mit Durchgriffs- und/oder Sichtöffnungen (28) für Armaturenzugriffs-, -anschluß- und -ableseelemente versehen sind.

5. Heizkessel nach einem der Ansprüche 1 bis 4,
dadurch gekennzeichnet,
daß das Rücklauf- (15) und/oder das Vorlaufleitungsstück (16) des Heizungskreisverteilers (1) aus zwei Teilen (15', 16') gebildet und die beiden Leitungsteile zueinander axial verstellbar ineinandergesteckt angeordnet und gegeneinander flüssigkeits- und druckfest abgedichtet ausgebildet sind, wobei das aufnehmende Leitungsteil (15'), in das andere (16') eingreift, mit einem Bördelrand (17) versehen und hinter diesem ein mit Außengewinde (18) versehener, äußerlich mehreckiger Haltering (19) mit Überwurfmutter (20) angeordnet ist und Haltering (19) und Überwurfmutter (20) in bezug auf ihre Leitungssteile (15', 16'auf diesen lose drehbar angeordnet sind.

6. Heizkessel nach Anspruch 5,
dadurch gekennzeichnet,
daß zwischen Bördelrand (17) und auf diesem aufgelegter Ringdichtung (21) einerseits und Überwurfmutter (20) andererseits lose eine Ringscheibe (22) angeordnet ist.

## Claims

1. A heating boiler (14) including at least one heating circuit distributor (1) in communication with the forward and return flow connections (12,13) of the boiler, with the said circuit distributor accommodating fixtures, such as recirculating pump, shut-off and multi-way valves, manometers, tempeerature indicators or the like, and with the heating circuit distributor (1) with the plane of extension (2) thereof being located in a direction vertical to the boiler rear wall face (3) next to the flue gas exhaust pipe (4) and with the fixtures (5) with the longitudinal axes (6) thereof being located therein in a direction transverse to the plane of extension (2) and the indicator armatures (5') relative to the planes of extension (2,2') being located in a manner oriented to the same side,
characterized in that
the shut-off valves (7) disposed in the circuit distributor (1) and provided with supply and discharge orifices (7") are formed of a tubular section (23) respectively open on either side and that disposed on opposing orifices (23") thereof, from one side or the other of the valve closure members (24) and on the respectively other free side is a closure plug (25) or an indicator (5'), and that with the multi-way valve (8) in the heating circuit distributor (1,1'), the housing thereof is provided with rotary slide insert openings (9) disposed on either side centrally of the rotary slide axis.

2. Heating boiler according to claim 1,
characterised in that
a second heating circuit distributor (1') with the plane of extension (2') thereof is disposed in parallel to the plane of extension (2) of the first circuit distributor (1) on the other side of the flue gas exhaust pipe (4).

3. A heating boiler according to claim 2,
characterized in that,
when providing two heating circuit distributors (1,1'), the recirculating pumps (10) are in opposing relationship at the same level but, relative to the two planes of extension (2,2'), are disposed with pump motors (11) directed respectively outwardly.

4. A heating boiler according to any one of claims 1 to 3,
characterized in that
the at least one heating circuit distributor (1) with the armatures thereof is located between two mutually closing shells (27) of heat-insulating material, and the shells (27) are provided with passage and/or view apertures (28) for elements enabling access to the armatures as well as connecting and reading capabilities thereof.

5. A heating boiler according to any one of claims 1 to 4,
characterized in that
the return flow section (15) and/or the forward conduit section (16) of the heating circuit distributor (1) is formed of two parts (15',16'), and that the two conduit parts are provided in a manner axially and adjustably telescoped and are sealed in liquid- and pressure-tight manner against one another, with the female conduit section (15') engaged by section (16') being provided with a flanged rim (17) and therebehind being located an externally threaded (18) and outwardly poltgonal holding ring (19) with sleeve nut (20), and with holding ring (19) and sleeve nut (20) relative to the conduit sections (15',16') thereof being provided thereon in a manner loosely rotatable.

6. A heating boiler according to claim 5,
characterised in that
an annular disc (22) is loosely provided between flanged rim (17) and annular sealant (21) disposed thereon, on the one hand, and sleeve nut (20), on the other hand.

## Revendications

1. Chaudière de chauffage (14) avec au moins un répartiteur de circuits de chauffage (1) raccordé aux raccords aller et retour (12, 13) de la chaudière de chauffage, dans lequel sont placés la raccorderie, comme la pompe de circulation, les vannes d'arrêt et à plusieurs voies et les manomètres, indicateurs de température ou équivalent, le répartiteur de circuits de chauffage (1) étant placé avec son plan de disposition (2) perpendiculairement à la face de dos de la chaudière de chauffage (3) près du tuyau d'échappement du gaz de fumée (4) et dans lequel la raccorderie (5) est placée avec ses axes longitudinaux (6) transversalement par rapport au plan de disposition (2) et la raccorderie des appareils indicateurs (5') étant orientée du même côté par rapport aux plans de disposition (2, 2'),

**caractérisée en ce**

que les vannes d'arrêt (7) placées dans le répartiteur de circuits de chauffage (1), pourvues d'orifices d'afflux et de décharge (7") sont formées par respectivement un morceau de tuyau (23) ouvert des deux côtés et aux orifices situés en face l'un de l'autre (23') duquel sont placés de l'un ou l'autre côté le corps d'obturation de la vanne (24) et de l'autre côté respectivement libre un bouchon d'obturation (25) ou un appareil indicateur (5') et que le bâti de la vanne à plusieurs voies (8) dans le répartiteur de circuits de chauffage (1,1') est pourvu d'orifices d'inserts de vanne rotative (9) placés des deux côtés et centrés sur l'axe de la vanne rotative.

2. Chaudière de chauffage selon la revendication 1,

**caractérisée en ce**

qu'un second répartiteur de circuits de chauffage (1') est placé avec son plan de disposition (2') parallèle au plan de disposition (2) du premier répartiteur de circuits de chauffage de l'autre côté du tuyau d'échappement du gaz de fumée (4).

3. Chaudière de chauffage selon la revendication 2,

**caractérisée en ce**

que, lors de l'arrangement de deux répartiteurs de circuits de chauffage (1, 1'), leurs pompes de circulation (10) se trouvent en face l'une de l'autre à la même hauteur mais qu'elles sont placées avec les moteurs des pompes (11) orientés respectivement vers l'extérieur par rapport aux deux plans de disposition (2, 2').

4. Chaudière de chauffage selon l'une des revendications 1 à 3,

**caractérisée en ce**

que le répartiteur de circuits de chauffage (1), qui est au moins prévu, est placé avec sa raccorderie entre deux coques en matière calorifuge qui se ferment l'une contre l'autre et que les coques (27) sont pourvues d'orifice de passage et/ou de regard (28) pour les éléments d'accès, de raccord et de lecture de la raccorderie.

5. Chaudière de chauffage selon l'une des revendications 1 à 4,

**caractérisée en ce**

que le tronçon de conduite aller (16) et/ou retour (15) du répartiteur de circuits de chauffage (1) est formé par deux pièces (15', 16') et que les deux parties de conduite sont placées encastrées l'une dans l'autre en étant réglables l'une par rapport à l'autre dans le sens axial et sont configurées en étant étanchées en étant étanches au liquide et résistantes à la pression, la partie de conduite (15'), qui sert de logement, dans laquelle l'autre partie (16') s'enclenche, étant pourvue d'un bord rabattu (17) et une bague de support (19) avec un écrou-raccord (20), pourvue d'un filet extérieur (18) et d'arêtes extérieures, étant placés derrière ce bord et la bague de support (19) avec l'écrou-raccord (20) étant placés en étant rotatifs librement sur leurs parties de conduite (15', 16') par rapport à celles-ci.

6. Chaudière de chauffage selon la revendication 5,

**caractérisée en ce**

q'une rondelle annulaire (22) est placée en étant mobile entre le bord rabattu (17) et le joint d'étanchéité (21) placé sur celui-ci d'une part et l'écrou-raccord (20) d'autre part.

Fig.1

Fig.4

Fig.2

Fig.3

Fig.5

Fig.6

Fig. 7

Fig. 8